# EUROPÄISCHE PATENTSCHRIFT

(11) **EP 0 789 252 B1**
(45) Veröffentlichungstag und Bekanntmachung des Hinweises auf die Patenterteilung: **23.06.1999**
(21) Anmeldenummer: 97101759.5
(22) Anmeldetag: 05.02.1997
(51) Int. Cl.: G01S 7/36, G01S 7/02, G01S 13/524

(54) **Verfahren zur Unterdrückung von Störsignalen bei einem Pulsdopplerradar**
Method of suppression of inteference signals in a puls doppler radar
Procédé de supression de brouillage dans un radar Doppler d'impulsion

(30) Priorität: 09.02.1996 DE 19604676
(43) Veröffentlichungstag der Anmeldung: 13.08.1997
(73) Patentinhaber: Daimler-Benz Aerospace Aktiengesellschaft, 81663 München (DE)
(72) Erfinder: Briemle, Eugen, Dr.-Ing., 88471 Laupheim (DE); Hommel, Hans, 88255 Baindt (DE)
(74) Vertreter: Fröhling, Werner, Dr.

(56) Entgegenhaltungen:
- DE-A- 3 243 606
- US-A- 3 995 271
- US-A- 4 044 359
- US-A- 5 451 961
- US-A- 5 483 240

## Beschreibung

Die Erfindung geht aus von einem Verfahren zur Unterdrükkung von Störsignalen bei einem Pulsdopplerradar mit mehreren (räumlichen) Empfangskanälen nach dem Oberbegriff des Patentanspruchs 1.

Mit dem Begriff Pulsdopplerradar wird im folgenden eine Radaranlage bezeichnet, bei der nach einem Sendepuls und/oder einer Gruppe ("Burst") von Sendepulsen eine Sendepause auftritt, in welcher Empfangssignale (Echosignale) empfangen und dann ausgewertet werden. Diese können von unterschiedlichen (Radar-)Zielen stammen, die Radarwellen reflektieren, beispielsweise von sogenannten Fest- und/oder Bewegtzielclutter sowie von zu detektierenden Fest - oder Bewegtzielen. Es werden aber auch künstliche, beispielsweise von einem (Radar-)Störsender, erzeugte (Radar-)Störsignale empfangen. Diese könnten möglicherweise ein zu detektierendes Bewegtziel vortäuschen. So kann beispielsweise ein solches Störsignal derart ausgebildet sein, daß ein echtes, an sich zu detektierendes Bewegtziel, beispielsweise ein fliegendes Ziel (Flugkörper), elektronisch vorgetäuscht wird. Solche Störsignale können zufällig entstehen, beispielsweise durch die von einer weiteren Radaranlage ausgesandten Sendesignale, die von dem Pulsdopplerradar empfangen und ausgewertet werden. Es ist aber auch möglich, insbesondere solche Störsignale ganz definiert zu erzeugen, beispielsweise durch feststehende und/oder bewegte (Radar-)Täuschsender.

Zur Unterdrückung solcher Störsignale ist es naheliegend, diese durch Korrelation der räumlich verteilten Empfangskanäle zu identifizieren und dann mittels eines Filters aus dem Empfangssignal auszublenden. Ein solches Filter sollte möglichst selektiv sein, das heißt, es sollten lediglich Störsignale unterdrückt werden und keine (Nutz-)Echosignale, die von zu detektierenden (Echt-)Zielen herrühren. Ist nun zu erwarten, daß sich die Störsignale in Abhängigkeit von der Zeit ändern, so ist es zweckmäßig, in möglichst geringen Zeitabständen durch Messungen und geeignete Analysen zu prüfen, ob Störsignale vorliegen, dann deren Art zu analysieren und dann ein daran angepaßtes Unterdrückungsfilter zu aktivieren. Dieses Verfahren zur Anpassung eines Unterdrückungsfilters an (zeitlich) wechselnde Störsignale (Störformen) wird auch Adaptation genannt. Bei einem Pulsdopplerradar ist es naheliegend, diese Adaptation unmittelbar nach jedem Sendepuls durchzuführen, das heißt, in dem Zeitabschnitt zwischen dem Sendepuls und dem Empfang des reflektierten Echosignals.

Wird nun diese Adaptation zeitlich unmittelbar anschließend an den Sendepuls durchgeführt, so kann eine passiv aufgenommene Meßprobe, die analysiert werden soll, in nachteiliger Weise Clutteranteile enthalten, die beispielsweise über die Nebenzipfel der Antenne empfangen werden.

Zur Beseitigung dieses Nachteils ist es naheliegend, mit der Aufnahme der Adaptationsdaten (Aufnahme der Meßprobe) nach dem Sendepuls zeitlich so lange zu warten, beispielsweise bis zu ungefähr 80 Mikrosekunden, bis die Clutteranteile abgeklungen sind, das heißt, vernachläßigbar sind. Dieses Verfahren hat aber den Nachteil, daß für die Aufnahme der Adaptationsdaten (Meßprobe) nur eine sehr kurze Zeit zur Verfügung steht. Denn beim Eintreffen der Empfangssignale (Echosignale) muß die Aufnahme der Adaptationsdaten abgeschlossen sein oder unterbrochen werden, sofern die Arbeitsweise des Pulsdopplerradars nicht eingeschränkt werden soll.

Aus der US-PS 5.483.240 ist ein Radar-Detektionssystem zum Einbau in Flugkörper bekannt, das zur Erkennung und Unterscheidung von Störsignalen, die entweder direkt von einem Störer oder indirekt vom Boden reflektiert empfangen werden, dient. Da die Frequenz des gesendeten Signals und die Radargeschwindigkeit bekannt sind, kann der Frequenzbereich von Boden-Clutter errechnet und das Empfangsband in der Weise verschoben werden, daß nur noch das Dopplerecho des Ziels, nicht jedoch Cluttersignale empfangen werden. Der Winkel des Störsignals kann dann anhand von Monopuls-Winkelmessungen bestimmt werden.

Aus der US-PS 3.995.271 ist ein Bord-MTI-Radargerät (AMTI - airborne moving target indicator) bekannt, bei dem eine adaptive Clutter- und Störsignalunterdrükkung durch eine automatische Einstellung der Amplituden- und Phasenverteilung der Antenne in der Weise erreicht wird, daß in dem Antennendiagramm Nullstellen in Richtung der Quelle der Störsignale erzeugt werden. Für jeden Empfangskanal sind adaptive Prozessorschaltungen sowie zahlreiche Summier- und Multiplizierschaltungen erforderlich, so daß der Schaltungsaufwand für diese Vorrichtung relativ groß ist.

Der Erfindung liegt demgegenüber die Aufgabe zugrunde, ein Verfahren zur Unterdrückung von Störsignalen bei einem Pulsdopplerradar anzugeben, mit dem zeitlich unmittelbar nach einem Sendepuls eine clutterarme Adaptationsdatenaufnahme möglich ist.

Diese Aufgabe wird mit dem Verfahren gemäß Anspruch 1 gelöst.

Vorteilhafte Ausgestaltungen und/oder Weiterbildungen sind den weiteren Ansprüchen entnehmbar.

Ein Vorteil besteht darin, daß sowohl Festzielclutter als auch Bewegtzielclutter unterdrückbar sind. Dabei ist sogar vorgebbar, bis zu welcher maximalen vorgebbaren Geschwindigkeit die Echosignale von Bewegtzielclutter unterdrückbar sind.

Weitere Vorteile ergeben sich aus der nachfolgenden Beschreibung.

Die Erfindung wird im folgenden anhand von Ausführungsbeispielen näher erläutert.

Bei einem Pulsdopplerradar wird in an sich bekannter Weise im Radarfrequenzbereich, z.B. GHz-Bereich, zunächst ein gepulstes trägerfrequentes Sendesignal (Sendepulse) ausgesandt. Für die Erfindung ist unerheblich, wie die Sendepulse sowie die zugehörige Sendepulsfolge gestaltet sind. Beispielsweise kann die Sendepulsfolge aus einer zeitlich äquidistanten Folge von Sendepulsen bestehen, das heißt, nach jedem Sendepuls ist eine (Puls-)Pause vorhanden, in der Echosignale (reflektierte Sendepulse) empfangen werden können. Alternativ dazu kann zunächst eine Folge von Sendepulsen ("Burst"), an die sich die (Puls-)Pause anschließt, ausgesandt werden. Alternativ oder zusätzlich kann beispielsweise eine sogenannte Intrapulsmodulation vorhanden sein und/oder beispielsweise ein Wechsel der Pulswiederholzeit (PRF).

In jedem Fall ist es erforderlich, den Empfangspfad der Radaranlage an die Art des gewählten Sendesignals anzupassen. Dabei wird das von der Radarantenne empfangene Signal (Empfangssignal, Echosignal) zuächst in bekannter Weise mittels Eingangsfilter sowie mindestens einem Frequenzmischer und einem lokalen Oszillator in ein Basisband umgesetzt und dort analysiert. Ist nun zusätzlich ein zufällig und/oder absichtlich erzeugtes Störsignal vorhanden, welches dem Ziel entsprechende Frequenzanteile besitzt, so ist in nachteiliger Weise eine Erkennung des Zieles erschwert oder sogar unmöglich. Für eine zuverlässige Zielerkennung ist es daher notwendig, derartige Störsignale zu unterdrücken durch die eingangs erwähnte Adaptation sowie ein daran angepaßtes (Stör-)Unterdrückungsfilter.

Die Erfindung beruht auf der Erkenntnis, daß Clutter ein Empfangssignal erzeugt, dessen Frequenzverschiebungsanteile und/oder Frequenzmodulationsanteile klein sind, im allgemeinen kleiner als 30 kHz.

Bei der Erfindung wird nun im wesentlichen unmittelbar nach dem Sendepuls (oder Burst) die Mittenfrequenz der in den Arraykanälen (Empfangskanäle für die räumlich verteilten Empfangskeulen) vorhandenen Empfangsfilter um eine vorgebbare Differenzfrequenz geändert. Diese Differenzfrequenz ist in Abhängigkeit von einer vorgebbaren Filtercharakteristik der Eingangsfilter so gewählt, daß die von Clutter herrührenden Signalanteile des Empfangssignals unterdrückt werden. Das heißt, je breiter die Filtercharakteristik (Frequenz-Bandbreite) gewählt ist, desto größer kann in Abhängigkeit von zu erwartenden Störsignalen die Verschiebung der Mittenfrequenz gewählt werden. Wird nun im wesentlichen gleichzeitig mit der Änderung der Mittenfrequenz auch eine von der Differenzfrequenz abhängige Änderung der bei der Verarbeitung von Empfangssignalen üblichen Mischfrequenzen (z.B. Frequenz des lokalen Oszillators) vorgenommen, so entsteht also vorteilhafterweise ein von Clutter-Signalanteilen befreiter Zeitabschnitt, in dem insbesondere die eingangs erwähnten Störsignale analysiert werden können. Aufgrund dieser Analyse können dann die für eine möglichst selektive Unterdrückung der Störsignale erforderlichen (Störunterdrückungs-)Filter an die gemessenen (analysierten) Störsignale angepaßt werden.

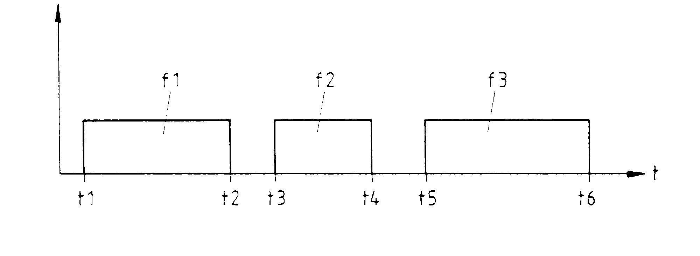

Die Figur zeigt schematisch den beschriebenen (Abstimmungs-)Zustand (Ordinate) der (des) Empfangsfilter(s) in Abhängigkeit von der Zeit t (Abszisse). Lediglich aus Gründen der Klarheit wird angenommen, daß das Sendesignal (Sendepulse) keine weitere Frequenzmodulation, z.B. Intrapulsmodulation, enthält.

Entsprechend der Figur wird nun angenommen, daß eine erste Mittenfrequenz f1 des Empfangsfilters zu einem ersten Zeitpunkt t1 auf die Sendefrequenz Sf des Radars abgestimmt wurde, das heißt, es ist f1 = Sf. Diese Abstimmung ist beispielsweise so gewählt, daß eine Erkennung (Detektion) von Clutter möglich ist. Soll nun zur Anpassung (Adaptation) der (Störunterdrückungs-)Filter eine störsignalbehaftete, aber von Clutteranteilen befreite Meßprobe passiv aufgenommen (empfangen) werden, beispielsweise nach dem Ende t2 eines Sendepulses oder (Sende-)Burst, so wird unmittelbar nach dem Ende t2, möglicherweise nach einer kurzen Schaltpause (t3 - t2) von beispielsweise einigen Mikrosekunden, das Empfangsfilter zu einem zweiten Zeitpunkt t3 auf die zweite Mittenfrequenz f2 abgestimmt, mit f2 = f1 ± Δf. Dabei ist Δf die bereits erwähnte Differenzfrequenz. Diese zweite Mittenfrequenz f2 bleibt bis zu einem vorgebbaren Zeitpunkt t4 erhalten. Dieser liegt in vorgebbarer Weise unmittelbar vor, beispielsweise einige Mikrosekunden, dem erwarteten Eintreffen von Echosignalen von zu detektierenden Zielen. Es wird angenommen, daß diese Echosignale frühestens zu dem Zeitpunkt t5 eintreffen können. Zu diesem Zeitpunkt t5 wird das Empfangsfilter dann auf eine dritte Mittenfrequenz f3 umgeschaltet, vorzugsweise ist f3 = f1 gewählt.

Es ist ersichtlich, daß der Betrag der Differenzfrequenz Δf so gewählt werden muß, daß zum einen Clutter-Signalanteile genügend unterdrückt werden, beispielsweise um 30 dB, und zum anderen für ein zu analysierendes Störsignal die Korrelation zwischen den Meßfiltern (Dopplerfilter) möglichst gut erhalten bleibt, so daß ein möglichst geringer, vorgebbarer maximaler Meßfehler entsteht. Dieser bezieht sich auf eine (Kanal-)Korrelation für das Störsignal bei der ersten Mittenfrequenz f1. Dieser wird der Meßfehler Null zugeordnet. Daraus ergibt sich, daß die Differenzfrequenz Δf von dem Aufbau der Radaranlage abhängt, insbesondere von den dort verwendeten Empfangs- und Auswertefiltern. In Abhängigkeit davon muß die Differenzfrequenz Δf empirisch oder rechnerisch bestimmt werden. Beispielsweise kann bei einer Sendefrequenz im GHz-Bereich die Differenzfrequenz Δf kleiner gleich ungefähr 120 MHz gewählt werden, ohne daß dadurch ein relevanter Meßfehler auftritt.

Die Erfindung ist daher besonders für ein Pulsdopplerradar geeignet mit einer kohärenten Signalverarbeitung der in Radarabtastintervallen auftretenden Echosignale. Eine solche Signalverarbeitung wird auch CPI-Verarbeitung ("coherent processing intervall") genannt. Denn dabei entstehen zwischen den Radarabtastintervallen (CPI-Intervallen) besonders große Zeitintervalle, in denen die beschriebene Messung und/oder Adaption der Störsignale durchführbar ist.

## Patentansprüche

1. Verfahren zur Unterdrückung von Störsignalen bei einem Pulsdopplerradar mit mehreren Empfangskanälen, wobei
- mindestens ein Sendepuls bei einer vorgebbaren Sendefrequenz Sf = f1 ausgesendet wird,
- im Radarfrequenzbereich liegende Empfangssignale von dem Pulsdopplerradar zu vorgebbaren Zeitpunkten empfangen und analysiert werden,
- im Signalgang des Pulsdopplerradars ein einstellbares Störsignal- Unterdrükkungsfilter zur Unterdrückung der Störsignale vorhanden ist, und
- das Störsignal-Unterdrückungsfilter nach Maßgabe der analysierten Störsignale eingestellt wird, dadurch gekennzeichnet, daß
- ein abstimmbares Empfangsfilter, dessen erste Mittenfrequenz f1 auf die Sendefrequenz Sf abstimmbar ist, zum Empfang von Störsignalen nach einem Ende t2 des Sendepulses auf eine zweite Mittenfrequenz f2 abgestimmt wird, und zwar gemäß der Formel t2 = Sf± Δf, wobei Δf eine vorgebbare Differenzfrequenz ist,
- die Differenzfrequenz Δf in Abhängigkeit von der Charakteristik des Empfangsfilters derart gewählt wird, daß in dem Empfangssignal möglicherweise vorhandene Clutter-Signalanteile unterdrückt werden,
- während der Abstimmung des Empfangsfilters auf die zweite Mittenfrequenz f2 die Störsignale gemessen werden,
- in Abhängigkeit von dieser Messung das Störsignal-Unterdrückungsfilter eingestellt (adaptiert) wird und
- das Empfangsfilter vor dem Empfang von zu detektierenden Ziel-Echo signalen auf eine wählbare dritte Mittenfrequenz f3 abgestimmt wird, die ungleich der zweiten Mittenfrequenz f2 ist.

2. Verfahren nach Anspruch 1,
dadurch gekennzeichnet, daß die dritte Mittenfrequenz f3 gleich der Sendefrequenz Sf gewählt wird.

3. Verfahren nach Anspruch 1 oder 2,
dadurch gekennzeichnet, daß das Empfangsfilter und die zweite Mittenfrequenz f2 in Abhängigkeit von den zu erwartenden Störsignalen derart gewählt werden, daß zum einen Clutter-Signalanteile unterdrückt werden und zum anderen die Korrelation der Störsignale in den Empfangskanälen nur um soviel von der entsprechenden Korrelation bei der Sendefrequenz abweicht, daß eine für die Detektion eines Radar-Zieles ausreichende Unterdrückung der Störsignale mittels des auf der Grundlage der Kanalkorrelation angepaßten Störsignal-Unterdrückungsfilters erfolgt.

4. Verfahren nach einem der vorhergehenden Ansprüche,
dadurch gekennzeichnet, daß
- für mehrere Radarabtastintervalle eine kohärente Signalverarbeitung erfolgt,
- für die Signalverarbeitung zunächst mehrere Sendepulse bei der Sendefrequenz Sf ausgesendet werden, wobei auf den letzten Sendepuls eine Pulspause folgt und
- das Empfangsfilter nach dem letzten Sendepuls auf die zweite Mittenfrequenz f2 abgestimmt wird.

5. Verfahren nach einem der vorhergehenden Ansprüche zur Verwendung in einem Bordradar.

6. Verfahren nach einem der vorhergehenden Ansprüche zur Verwendung bei der Unterdrückung künstlich erzeugter Störsignale.

## Claims

1. Method of suppressing interference signals in a doppler pulse radar with several receiving channels, wherein
- at least one transmission pulse is transmitted at a presettable transmission frequency Sf = f1,
- received signals, which lie in the radar frequency range, of the doppler pulse radar are received and analysed at presettable time instants,
- a settable interference signal suppression filter for suppression of the interference signals is present in the signal path of the doppler pulse radar, and
- the interference signal suppression filter is set in accordance with the analysed interference signals, characterised in that
- a tunable receiving filter, the first centre frequency f1 of which is tunable to the transmission frequency Sf, is tuned to a second centre frequency f2 for reception of interference signals after an end t2 of the transmission pulse, and namely according to the formula f2 = Sf ± Δf, wherein Δf is a presettable difference frequency,
- the difference frequency Δf is selected in dependence on the characteristic of the receiving filter in such a manner that clutter signal components possibly present in the received signal are suppressed,
- during the tuning of the receiving filter to the second centre frequency f2 the interference signals are measured
- the interference signal suppression filter is adjusted (adapted) in dependence on this measurement and
- the receiving filter is tuned, before the reception of target echo signals to be detected, to a selectable third centre frequency f3 which is unequal to the second centre frequency f2.

2. Method according to claim 1, characterised in that the third centre frequency f3 is selected to be equal to the transmission frequency Sf.

3. Method according to claim 1 or claim 2, characterised in that the receiving filter and the second centre frequency f2 are selected in dependence on the anticipated interference signals in such a manner that on the one hand clutter signal components are suppressed and on the other hand the correlation of the interference signals in the receiving channels deviates only so much from the corresponding correlation with the transmission frequency that a suppression, which is sufficient for detection of a radar target, of the interference signals takes place by means of the interference signal suppression filter matched to the basis of the channel correlation.

4. Method according to one of the preceding claims, characterised in that
- a coherent signal processing is carried out for several radar scanning intervals,
- initially several transmission pulses at the transmission frequency Sf are transmitted for the signal processing, wherein a pulse pause follows the last transmission pulse, and
- the receiving filter is tuned to the second centre frequency f2 after the last transmission pulse.

5. Method according to one of the preceding claims for use in an on-board radar.

6. Method according to one of the preceding claims for use in the suppression of artificially produced interference signals.

## Revendications

1. Procédé de suppression de signaux parasites dans un radar Doppler pulsé à plusieurs canaux de réception, selon lequel
- au moins une impulsion d'émission est émise à une fréquence d'émission prédéterminée Sf = f1,
- des signaux de réception se trouvant dans la plage de fréquences radar provenant du radar Doppler pulsé sont reçus et analysés à des instants prédéterminés,
- dans le trajet de signal du radar Doppler pulsé est disposé est filtre de suppression de signal parasites réglable en vue de la suppression des signaux parasites, et
- le filtre de suppression de signaux parasites est réglé en fonction des signaux parasites analysés, caractérisé en ce que
- un filtre de réception réglable, dont la première fréquence médiane f1 peut être réglée sur la fréquence d'émission Sf, en vue de la réception de signaux parasites après la fin t2 de l'impulsion d'émission, est réglé sur une seconde fréquence médiane f2, selon la formule f2 = Sf ± Δf, Δf étant une fréquence différentielle réglable pouvant être prédéterminée,
- la fréquence différentielle Δf étant choisie en fonction de la caractéristique du filtre de réception de telle sorte que des composantes de signaux parasites éventuellement présentes sont supprimées,
- durant l'accord du filtre de réception sur la seconde fréquence médiane f2 sont mesurés les signaux parasites,
- en fonction de cette mesure est réglé (adapté) le filtre de suppression de signaux parasites et
- le filtre de réception est accordé avant la réception de signaux d'écho de cible à détecter sur une troisième fréquence médiane réglable f3, qui est différente de la seconde fréquence médiane f2.

2. Procédé selon la revendication 1, caractérisé en ce que la troisième fréquence médiane f3 est choisie égale à la fréquence d'émission Sf.

3. Procédé selon la revendication 1 ou 2, caractérisé en ce que le filtre de réception et la seconde fréquence médiane f2 sont choisis en fonction des signaux parasites attendus, de telle sorte que, d'une part des composantes de signaux parasites sont supprimées, et que d'autre part, la corrélation des signaux parasites dans les canaux de réception s'écarte seulement de la corrélation correspondante dans le cas de la fréquence d'émission, de telle sorte qu'une suppression suivante pour la détection d'une cible radar des signaux parasites s'effectue au moyen du filtre de suppression de signaux parasites adapté en fonction de la corrélation de canal.

4. Procédé selon l'une quelconque des revendications précédentes, caractérisé en ce que
- pour plusieurs intervalles d'analyse radar est effectué un traitement de signaux cohérent,
- pour le traitement de signaux, plusieurs impulsions d'émission sont tout d'abord émises à la fréquence d'émission Sf, une pause d'impulsion succède à la dernière impulsion d'émission et
- le filtre de réception est accordé après la dernière impulsion d'émission sur la seconde fréquence médiane f2.

5. Procédé selon l'une quelconque des revendications précédentes en vue de l'utilisation dans un radar de bord.

6. Procédé selon l'une quelconque des revendications précédentes en vue de l'utilisation dans le cas de la suppression de signaux parasites générés artificiellement.
